(19) Europäisches Patentamt
European Patent Office
Office européen des brevets

(11) **EP 3 710 746 B1**

(12) **EUROPEAN PATENT SPECIFICATION**

(45) Date of publication and mention
of the grant of the patent:
**03.04.2024  Bulletin 2024/14**

(21) Application number: **17931967.8**

(22) Date of filing: **18.11.2017**

(51) International Patent Classification (IPC):
*F21V 8/00* *(2006.01)*      *G02B 6/00* *(2006.01)*

(52) Cooperative Patent Classification (CPC):
**G02B 6/0031; G02B 6/0025; G02B 6/0028**

(86) International application number:
**PCT/US2017/062439**

(87) International publication number:
**WO 2019/099041 (23.05.2019 Gazette 2019/21)**

(54) **BAR COLLIMATOR, BACKLIGHT SYSTEM AND METHOD**

STABKOLLIMATOR, HINTERGRUNDBELEUCHTUNGSSYSTEM UND VERFAHREN

COLLIMATEUR À BARRES, SYSTÈME ET PROCÉDÉ DE RÉTROÉCLAIRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.09.2020  Bulletin 2020/39**

(73) Proprietor: LEIA Inc.
**Menlo Park, CA 94025 (US)**

(72) Inventors:
• **MA, Ming**
**Menlo Park, California 94025 (US)**
• **LI, Xuejian**
**Menlo Park, California 94025 (US)**
• **FATTAL, David A.**
**Menlo Park, California 94025 (US)**

(74) Representative: **Carpmaels & Ransford LLP
One Southampton Row
London WC1B 5HA (GB)**

(56) References cited:
**WO-A1-2016/106987      WO-A1-2016/106987
WO-A1-2017/039756      JP-A- 2003 007 114
KR-B1- 101 408 688      US-A1- 2008 043 490
US-A1- 2014 268 867      US-A1- 2015 036 068**

• **HO JOO ET AL: "Practical Multiple Scattering for
Rough Surfaces ACM Reference Format", ACM
TRANS. GRAPH. ARTICLE, [Online] vol. 37, no.
12, 1 November 2018 (2018-11-01), XP055927185,
Internet Retrieved from the Internet:
URL:http://giga.cps.unizar.es/~ajarabo/pub
s/Lee2018practical/downloads/Lee2018practi
cal_low.pdf> [retrieved on 2022-06-01]**

**Description**

CROSS-REFERENCE TO RELATED APPLICATIONS

N/A

STATEMENT REGARDING FEDERALLY SPONSORED RESEARCH OR DEVELOPMENT

N/A

BACKGROUND

Electronic displays are a nearly ubiquitous medium for communicating information to users of a wide variety of devices and products. Most commonly employed electronic displays include the cathode ray tube (CRT), plasma display panels (PDP), liquid crystal displays (LCD), electroluminescent displays (EL), organic light emitting diode (OLED) and active matrix OLEDs (AMOLED) displays, electrophoretic displays (EP) and various displays that employ electromechanical or electrofluidic light modulation (e.g., digital micromirror devices, electrowetting displays, etc.). Generally, electronic displays may be categorized as either active displays (i.e., displays that emit light) or passive displays (i.e., displays that modulate light provided by another source). Among the most obvious examples of active displays are CRTs, PDPs and OLEDs/AMOLEDs. Displays that are typically classified as passive when considering emitted light are LCDs and EP displays. Passive displays, while often exhibiting attractive performance characteristics including, but not limited to, inherently low power consumption, may find somewhat limited use in many practical applications given the lack of an ability to emit light.

To overcome the limitations of passive displays associated with emitted light, many passive displays are coupled to an external light source. The coupled light source may allow these otherwise passive displays to emit light and function substantially as an active display. Examples of such coupled light sources are backlights. A backlight may serve as a source of light (often a panel backlight) that is placed behind an otherwise passive display to illuminate the passive display. For example, a backlight may be coupled to an LCD or an EP display. The backlight emits light that passes through the LCD or the EP display. The light emitted is modulated by the LCD or the EP display and the modulated light is then emitted, in turn, from the LCD or the EP display. Often backlights are configured to emit white light. Color filters are then used to transform the white light into various colors used in the display. The color filters may be placed at an output of the LCD or the EP display (less common) or between the backlight and the LCD or the EP display, for example.

JP 2003 007114 A relates to a front light that has a point light source, a guide rod that converts light from the point light source to a uniform linear light source and a transmissive light guide plate that has unevenness on one surface, and the front light outputs lighting light through the other surface of the light guide plate. A prism sheet that reduces light to parallel light and a reflection-polarization film that gives fixed polarization are located between the guide rod and the light guide plate.

KR 101 408 688 B1 relates to a liquid crystal display device that has a liquid crystal panel in which a liquid crystal panel is interposed between two adjacent substrates through a liquid crystal layer and changes the alignment direction of the liquid crystal molecules in an electric field in the liquid crystal panel to realize a difference in transmittance. However, since the liquid crystal panel does not have its own light emitting element, a separate light source is required to display the difference in transmittance as an image. To this end, a backlight having a light source is disposed on the back surface of the liquid crystal panel.

WO 2016/106987 relates to a multi-view pixel directional backlight module and naked-eye 3D display device, the multi-view pixel directional backlight module comprising at least two rectangular light guide plates closely stacked together; a light-emerging surface of each rectangular light guide plate is provided with a plurality of pixels with different directionalities formed by a nanometer diffractive grating thereon; each rectangular light guide plate is provided with a light source set on at least one side edge; after a light from the light source set enters into an interior of the corresponding light guide plate, an emergent light shows at each of pixels of multiple pixel arrays on the light-emerging surface of the light guide plate.

US 2008/043490 A1 relates to a light guide containing substantially aligned non-spherical particles that provides control of light scattering. One or more regions containing ellipsoidal particles may be used and the particle sizes may vary between 2 and 100 microns in the smaller dimension. The light scattering regions may be substantially orthogonal in their axis of alignment.

BRIEF DESCRIPTION OF THE DRAWINGS

Various features of examples and embodiments in accordance with the principles described herein may be more readily understood with reference to the following detailed description taken in conjunction with the accompanying drawings, where like reference numerals designate like structural elements, and in which:

Figure 1A illustrates a side view of a bar collimator.
Figure 1B illustrates a plan view of a bar collimator.
Figure 1C illustrates an exploded perspective view of a bar collimator.
Figure 1D illustrates a magnified view of a portion of a surface of a bar collimator.
Figure 2A illustrates a side view of a bar collimator 100.
Figure 2B illustrates a plan view of the bar collimator of Figure 2A.
Figure 3A illustrates a side view of a bar collimator including a light-coupling reflector layer in an example, according to an embodiment of the invention consistent with the principles described herein.
Figure 3B illustrates a plan view of a bar collimator including a light-coupling reflector layer in an example, according to an embodiment of the invention consistent with the principles described herein.
Figure 4A illustrates a side view of a backlight system.
Figure 4B illustrates a plan view of a backlight system.
Figure 5A illustrates a side view of a backlight system comprising a multiview backlight.
Figure 5B illustrates a perspective view of the backlight system of Figure 5A.
Figure 6 illustrates a flow chart of a method of collimating light.

Certain examples and embodiments have other features that are one of in addition to and in lieu of the features illustrated in the above-referenced figures. These and other features are detailed below with reference to the above-referenced figures.

DETAILED DESCRIPTION

There is provided a backlight according to claim 1 and a method of collimating light in the backlight of claim 1, according to claim 12. In particular, a bar collimator is provided that includes a light guide configured to receive light at an end of the light guide and to guide the received light along a length of the light guide as guided light. The bar collimator further includes a light extraction feature located on a side of the light guide along the light guide length. The light extraction feature is configured to scatter a portion of the guided light out of the light guide as extracted light and to direct the extracted light toward an input of a backlight. The bar collimator further includes a collimation film between the light guide and the backlight input. The collimation film is configured to further collimate the extracted light as collimated light. The collimated light has an extent corresponding to a length of the backlight input. The collimated light provides an illumination source of the backlight.

According to various embodiments, light from a light source (e.g., a plurality of LEDs) may be coupled into the bar collimator for collimation. According to some embodiments, the collimated light from the bar collimator may be coupled into a light guide of a backlight used in an electronic display. In some embodiments, the electronic display may be a three-dimensional (3D) or multiview electronic display used to display 3D information, e.g., as a 3D or multiview image. For example, the electronic display may be an autostereoscopic or 'glasses free' multiview or 3D electronic display.

In particular, a multiview display may employ a backlight to provide illumination of a multiview image being displayed by the multiview display. For example, the backlight may comprise a plurality of multibeam elements configured to provide directional light beams corresponding to pixels of the multiview display (or equivalently of the multiview image). In various embodiments, the directional light beams may have different principal angular directions (also referred to as 'the differently directed light beams') from one another. According to some embodiments, these differently directed light beams produced by the backlight may be modulated and serve as multiview pixels corresponding to different views of the multiview display. In these embodiments, the light collimation provided by the bar collimator may be used to produce collimated light that is substantially uniform (i.e., without striping) within the backlight.

Herein a 'two-dimensional display' or '2D display' is defined as a display configured to provide a view of an image that is substantially the same regardless of a direction from which the image is viewed (i.e., within a predefined viewing angle or range of the 2D display). A conventional liquid crystal display (LCD) found in may smart phones and computer monitors are examples of 2D displays. In contrast herein, the 'multiview display' is defined as an electronic display or display system configured to provide different views of a multiview image in or from different view directions. In particular, the different views may represent different perspective views of a scene or object of the multiview image.

Herein, a 'light guide' is defined as a structure that guides light within the structure using total internal reflection. In particular, the light guide may include a core that is substantially transparent at an operational wavelength of the light guide. In various examples, the term 'light guide' generally refers to a dielectric optical waveguide that employs total internal reflection to guide light at an interface between a dielectric material of the light guide and a material or medium that surrounds that light guide. By definition, a condition for total internal reflection is that a refractive index of the light guide is greater than a refractive index of a surrounding medium adjacent to a surface of the light guide material. In some embodiments, the light guide may include a coating in addition to or instead of the aforementioned refractive index difference to further facilitate the total internal reflection. The coating may be a reflective coating, for example.

Further herein, the term 'bar' when applied to a light guide as in a 'bar-shaped light guide' and by extension as in a 'bar collimator' is defined as a three-dimensional rectilinear column, which is sometimes referred to as a 'bar' guide. Thus, 'bar-shaped' light guide and also a 'bar collimator' has a generally three-dimensional columnar shape, by definition. In particular, a bar-shaped light guide is defined as a light guide configured to guide light along a length bounded by two pairs of opposing surfaces aligned in two substantially orthogonal directions (e.g., a top surface and a bottom surface, and two side surfaces of the light guide). Further, a dimension orthogonal to the length of either of the two pairs of opposing sides (e.g., a width or a height) is less than the length of the light guide, by definition. According to various embodiments, a first pair of opposing surfaces (e.g., the top and bottom surfaces) of the bar-shaped light guide is substantially parallel to one another in at least a differential sense. Similarly, two other generally opposing sides (e.g., opposite sides) are also substantially parallel to one another in at least a differential sense, according to various embodiments. That is, within any differentially small region or length of the bar-shaped light guide, opposing surfaces (e.g., top and bottom surfaces, a pair of side surfaces, etc.) are substantially parallel to one another. As such, a bar collimator may be characterized as a substantially rectangular column having a length along which a top and a bottom are substantially parallel to one another and two sides also substantially parallel to one another, where the length is greater than a width of the top and bottom or a height of the two sides, as discussed above.

According to various embodiments described herein, a light extraction feature located on a side of the light guide along the light guide length may be employed to scatter or couple light out of a light guide (e.g., a bar collimator) as a extracted light or an extracted light beam. Herein, a light extraction feature is generally defined as a plurality of features configured to extract light from the light guide. For example, diffusing white spots printed on a back side surface of the light guide may be used. Additional examples of light extraction features include diffraction gratings on the front side surface or the back side surface, whether uniform or chirped. The spacing or grating pitch may be sub-wavelength (i.e., less than a wavelength of the guided light). The gratings may comprise grooves in the side surface (front or back) of the light guide or ridges on the side surface (front or back). Further examples of light extraction features include, but are not limited to, micro-reflective elements, such as prismatic cavities, prismatic scatterers, and semi-spherical elements, in or on the side surface(s).

Herein, a 'light source' is defined as a source of light (e.g., an apparatus or device) that emits light when activated. A light source herein may be substantially any source of light or optical emitter including, but not limited to, one or more of a light emitting diode (LED), a laser, an organic light emitting diode (OLED), a polymer light emitting diode, a plasma-based optical emitter, a fluorescent lamp, an incandescent lamp, and virtually any other source of light. The light produced by a light source may have a color or may include a particular wavelength of light. As such, a 'plurality of light sources of different colors' is explicitly defined herein as a set or group of light sources in which at least one of the light sources produces light having a color, or equivalently a wavelength, that differs from a color or wavelength of light produced by at least one other light source of the light source plurality. Moreover, the 'plurality of light sources of different colors' may include more than one light source of the same or substantially similar color as long as at least two light sources of the plurality of light sources are different color light sources (i.e., produce a color of light that is different between the at least two light sources). Hence, by definition herein, a plurality of light sources of different colors may include a first light source that produces a first color of light and a second light source that produces a second color of light, where the second color differs from the first color. In some embodiments, the light source comprises a polychromatic light emitting diode configure to provide white light.

By definition herein, a 'multibeam element' is a structure or element of a backlight or a display that produces light that includes a plurality of directional light beams. In some embodiments, the multibeam element may be optically coupled to a light guide of a backlight to provide the light beams by coupling out a portion of light guided in the light guide. Further, the light beams of the plurality of light beams produced by a multibeam element have different principal angular directions from one another, by definition herein. In particular, by definition, a light beam of the plurality has a predetermined principal angular direction that is different from another light beam of the light beam plurality. Furthermore, the light beam plurality may represent a light field. For example, the light beam plurality may be confined to a substantially conical region of space or have a predetermined angular spread that includes the different principal angular directions of the light beams in the light beam plurality. As such, the predetermined angular spread of the light beams in combination (i.e., the light beam plurality) may represent the light field. According to various embodiments, the different principal angular directions of the various light beams are determined by a characteristic including, but not limited to, a size (e.g., length, width, area, etc.) of the multibeam element. In some embodiments, the multibeam element may be considered an 'extended point source', i.e., a plurality of point light sources distributed across an extent of the multibeam element, by definition herein.

Herein, the 'size' may be defined in any of a variety of manners to include, but not be limited to, a length, a width or an area. For example, the size of the multibeam element may be a length of the multibeam element. In another example, size may refer to an area of the multibeam element. In some embodiments, the size of the multibeam element is comparable to a size of a light valve used to modulate directional light beams of the plurality of directional light beams. As such, the multibeam element size may be comparable to a light valve size when the multibeam element size is between about fifty percent (50%) and about two hundred percent (200%) of the light valve size. For example, if the multibeam element size is denoted 's' and the light valve size is denoted 'S', then the multibeam element size *s* may be given by equation (1) as:

$$\frac{1}{2}S \le s \le 2S \qquad\qquad (1)$$

In other examples, the multibeam element size is greater than about sixty percent (60%) of the light valve size, or about seventy percent (70%) of the light valve size, or greater than about eighty percent (80%) of the light valve size, or greater than about ninety percent (90%) of the light valve size, and the multibeam element is less than about one hundred eighty percent (180%) of the light valve size, or less than about one hundred sixty percent (160%) of the light valve size, or less than about one hundred forty (140%) of the light valve size, or less than about one hundred twenty percent (120%) of the light valve size. For example, the multibeam element may be comparable in size to the light valve size where the multibeam element size is between about seventy-five percent (75%) and about one hundred fifty (150%) of the light valve size. In another example, the multibeam element and light valve may be comparable in size where the multibeam element size is between about one hundred twenty-five percent (125%) and about eighty-five percent (85%) of the light valve size. According to some embodiments, the comparable sizes of the multibeam element 420 and the light valve 406' may be chosen to reduce, or in some examples to minimize, dark zones between views of the multiview display, while at the same time reducing, or in some examples minimizing, an overlap between views of the multiview display.

Further, as used herein, the article 'a' is intended to have its ordinary meaning in the patent arts, namely 'one or more'. For example, 'a light extraction feature' means one or more light extraction features and as such, 'the light extraction feature' means 'the light extraction feature(s)' herein. Also, any reference herein to 'top', 'bottom', 'upper', 'lower', 'up', 'down', 'front', back', 'first', 'second', 'left' or 'right' is not intended to be a limitation herein. Herein, the term 'about' when applied to a value generally means within the tolerance range of the equipment used to produce the value, or may mean plus or minus 10%, or plus or minus 5%, or plus or minus 1%, unless otherwise expressly specified. Further, the terms 'substantially' and 'about,' as used herein, mean a majority, or almost all, or all, or an amount within a range of about 51% to about 100%. Moreover, examples herein are intended to be illustrative only and are presented for discussion purposes and not by way of limitation.

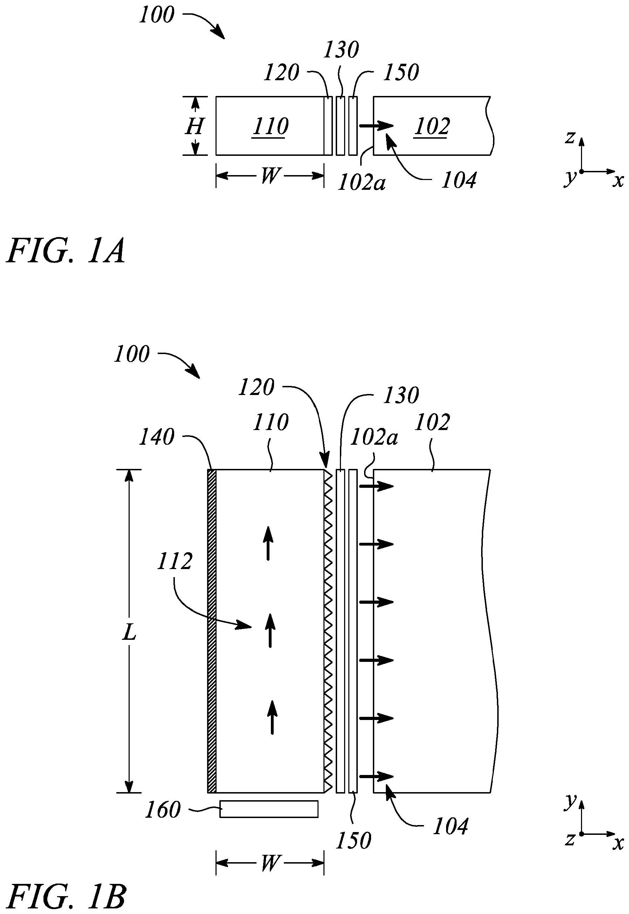

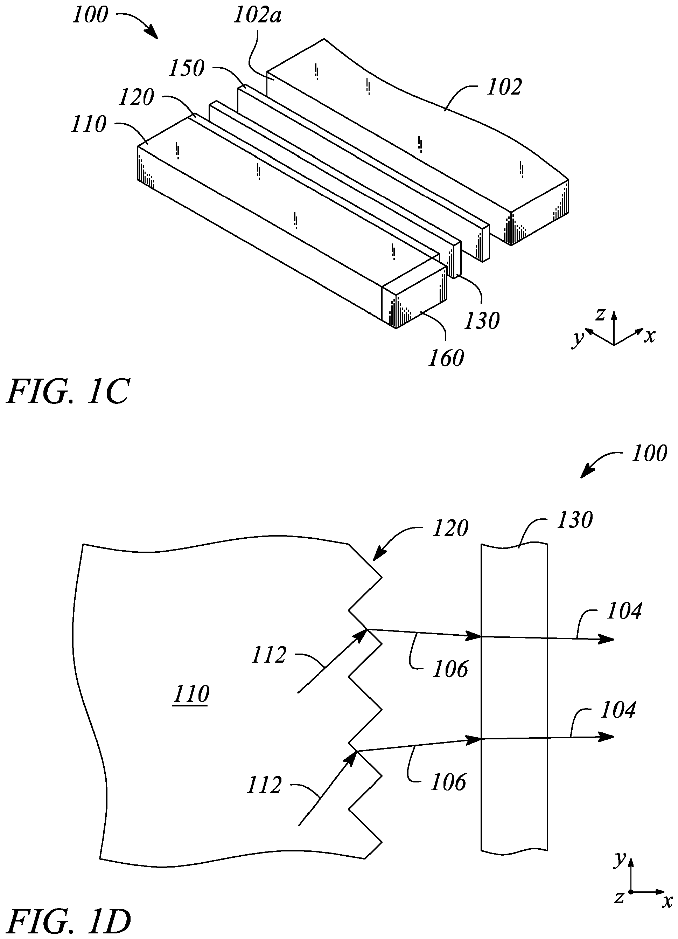

In accordance with principles disclosed herein, a bar collimator is provided. Figure 1A illustrates a side view of a bar collimator 100 in an example, according to an embodiment consistent with the principles described herein. Figure 1B illustrates a plan view of a bar collimator 100 in an example, according to an embodiment consistent with the principles described herein. Figure 1C illustrates an exploded perspective view of a bar collimator 100 in an example, according to an embodiment consistent with the principles described herein. Figure 1D illustrates a magnified view of a portion of a surface of a bar collimator 100 in an example, according to an embodiment consistent with the principles described herein. In particular, Figure 1C represents an exploded perspective view of the bar collimator 100 depicted in Figures 1A and 1B, while Figure 1D represents a magnified view of a portion of a surface on a right side the bar collimator 100 depicted in Figures 1A and 1B.

According to various embodiments, the bar collimator 100 illustrated in Figured 1A-1D is configured to serve as an illumination source of a backlight 102. In particular, the bar collimator 100 is configured to provide collimated light 104 to an input 102a of the backlight 102. Further, the provided collimated light 104 has an extent corresponding to a length of the backlight input 102a, according to various embodiments. For example, a length L of the bar collimator 100 (or at least a portion that emits the collimated light 104) may be substantially similar a length of the backlight input 102a. In some embodiments, the provided collimated light 104 is configured to be uniform or at least substantially uniform in intensity along the length of the backlight input 102a. In other embodiments, the provided collimated light 104 may have an intensity profile that varies (i.e., a non-uniform intensity profile) along the length of the backlight input 102a. For example, the intensity profile may be configured to compensate for non-ideal propagation or emission characteristics of the backlight 102.

As illustrated in Figures 1A-1D, the bar collimator 100 comprises a light guide 110. The light guide 110 is configured to guide light along a length of the light guide 110 as guided light 112. According to various embodiments, the light guide 110 is configured to guide the guided light 112 using total internal reflection. For example, the light guide 110 may include an optically transparent dielectric material configured as an optical waveguide, the dielectric material having a refractive index that is greater than a refractive index of a medium surrounding the optical waveguide. A difference between refractive indices of the dielectric material and the surrounding medium is configured to facilitate total internal reflection of the guided light 112 within the bar collimator 100 according to one or more guided modes thereof. Further, a non-zero propagation angle of the guided light 112 within the light guide 110 may correspond to an angle that is less than a critical angle for total internal reflection, according to various examples. In Figure 1B, propagation of the guided light 112 is illustrated as an arrow pointing along the *y*-direction and representing a propagating optical beam within the light guide 110.

In various embodiments, the light guide 110 is or comprises a bar-shaped, columnar optical waveguide, e.g., as illustrated in Figures 1A-1C. In particular, as illustrated in Figures 1A-1C the light guide 110 has a bar shape with a length L in a *y*-direction that is greater than both a width $W$ in an *x*-direction and height $H$ in a *z*-direction (i.e., $L > W$ and $L > H$). According to various embodiments, the light guide 110 may include or be made up of any of a variety of dielectric materials including, but not limited to, one or more of various types of glass (e.g., silica glass, alkali-aluminosilicate glass, borosilicate glass, etc.) and substantially optically transparent plastics or polymers (e.g., poly(methyl methacrylate) or 'acrylic glass', polycarbonate, etc.). In some embodiments, the light guide 110 may further include a cladding layer on at least a portion of a surface (e.g., the top surface and/or the bottom surface) of the light guide 110 (not illustrated). The cladding layer may be used to further facilitate total internal reflection, for example.

The bar collimator 100 illustrated in Figures 1A-1D further comprises a light extraction feature 120. The light extraction feature 120 is disposed on a side of the light guide 110 along the light guide length L, as illustrated. The light extraction feature 120 is configured to scatter a portion of the guided light 112 out of the light guide 110 as extracted light 106. Figure 1D illustrates the guided light 112 interacting with and being scattered by the light extraction feature 120 to provide the extracted light 106. The light extraction feature 120 is further configured to direct the extracted light 106 toward the input 102a of the backlight 102. In Figure 1D, the extracted light 106 is illustrated in as an arrow exiting the light extraction feature 120, while the guided light 112 is illustrated as an arrow incident on the light extraction feature 120. In some embodiments, the collimated light 104 may comprise the extracted light 106, e.g., the extracted light 106 may be collimated or partially collimated.

The light extraction feature 120 comprises a prismatic layer affixed to a side of the light guide 110.

In some embodiments, the light extraction feature 120 may be located on a side of the light guide 110 adjacent to the backlight 102. For example, the light extraction feature 120 is illustrated as being located on the backlight-adjacent side of the light guide 110 in Figures 1A-1D, by way of example and not limitation. When on the backlight-adjacent side, guided light 112 in the light guide 110 may interact with the light extraction feature 120 resulting in scattering of the guided light portion out of the light guide 110 through the light extraction feature 120. In Figure 1D, an arrow illustrates light extraction by the light extraction feature 120 to provide the extracted light 106. Note that the light extraction feature 120 may be referred to as a transmissive scattering feature when located on the backlight-adjacent side, as illustrated.

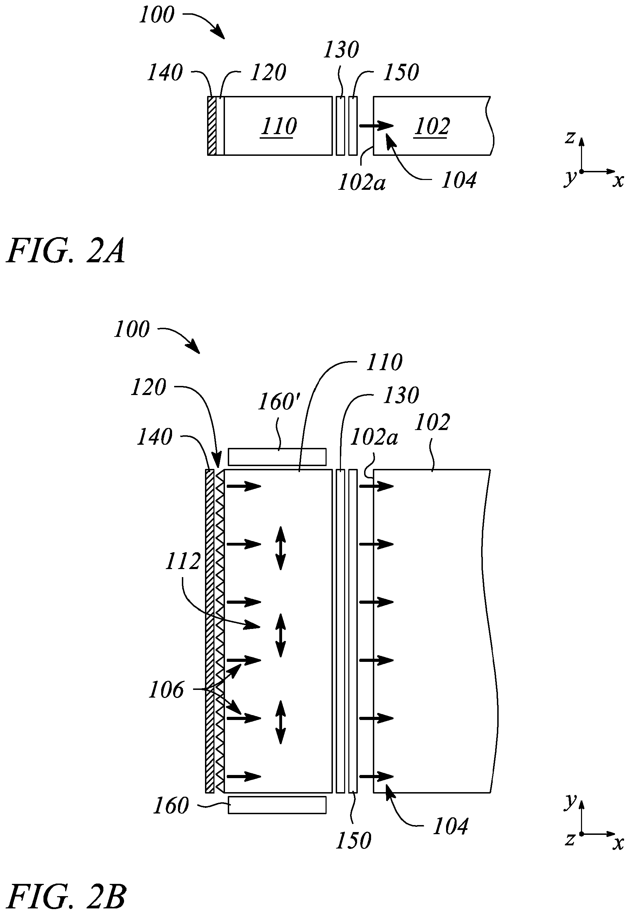

In other embodiments, the light extraction feature 120 may be located on a side of the light guide 110 opposite to the backlight-adjacent side of the light guide 110. Figure 2A illustrates a side view of a bar collimator 100 in an example, according to another embodiment consistent with the principles described herein. Figure 2B illustrates a plan view of the bar collimator 100 of Figure 2A in an example, according to another embodiment consistent with the principles described herein. As illustrated in Figures 2A-2B, the bar collimator comprises the light guide 110 and the light extraction feature 120. However, the light extraction feature 120 is illustrated in Figures 2A-2B as being located on the side of the light guide 110 opposite to the backlight-adjacent side of the light guide 110. When on the opposite side from the backlight-adjacent side of the light guide 110, guided light 112 in the light guide 110 may interact with the light extraction feature 120 resulting in scattering of the guided light portion out of the light guide 110 away from the light extraction feature 120 and toward the backlight-adjacent side to provide the extracted light 106. An arrow in Figure 2B illustrates light extraction by the light extraction feature 120 to provide the extracted light 106 directed toward the backlight 102. Note that the light extraction feature 120 located on the side opposite to the backlight-adjacent side as illustrated in Figures 2A-2B may be referred to as a reflective scattering feature.

According to various embodiments, the bar collimator 100 further comprises a collimation film 130 located between the light guide 110 and the backlight input 102a, as illustrated in Figures 1A-1C and 2A-2B. The collimation film 130 is configured to collimate (or to further collimate) the extracted light 106 as the collimated light 104. The collimated light 104 provided by the collimation film 130 from the extracted light 106, in turn, may be provided to the backlight 102 by the bar collimator 100, as illustrated. In some embodiments, the collimation film 130 may comprise a prismatic film configured as a brightness enhancement film. Brightness enhancement films (BEF) are available, for example, from 3M Optical Systems Division, St. Paul, MN as a Vikuiti™ BEF II and are micro-replicated enhancement films that utilize a prismatic structure to provide up to a 60% brightness gain.

In some embodiments, the bar collimator 100 may further comprise a reflective layer 140 on or adjacent to the side 110b of the light guide 110 opposite to a backlight-adjacent side. The reflective layer 140 is configured to reflect light toward the backlight 102 and backlight input 102a, according to various embodiments. Examples of the reflective layer 140 are illustrated in Figures 1B and 2A-2B. As illustrated, the reflective layer 140 may be used with the light extraction feature 120 located on either side of the light guide 110. However, the reflective layer 140 may be particularly useful when the light extraction feature 120 is configured as a reflective scattering feature, since the reflective layer may 140 serve to directly enhance reflective scattering. The reflective layer 140 may comprise a metal film or similar reflective material layer deposited on the side of the light guide 110 opposite the backlight-adjacent side, for example. In other examples, the reflective layer 140 may comprise a reflective film such as, but not limited to, an enhanced specular reflector (ESR) film applied to the light guide side. Examples of ESR films include, but are not limited to, a Vikuiti™ Enhanced Specular Reflector Film available from 3M Optical Systems Division, St. Paul, MN.

In some embodiments, the bar collimator 100 may further comprise a polarization recycling layer 150. The polarization recycling layer 150 may be located between the light guide 110 and the backlight 102, for example. In Figures 1A-1B, the polarization recycling layer 150 is illustrated between the backlight input 102a and the collimation film 130, by way of example and not limitation. The polarization recycling layer 150 is configured to recycle light received from the backlight input 102a and redirect the recycled light back toward the backlight 102. The recycled light may be used to provide additional illumination to or increase an effective illumination brightness within the backlight 102, according to various embodiments. The polarization recycling layer 150 may comprise a reflective polarizer film or dual brightness enhancement film (DBEF), for example. Examples of DBEF films include, but are not limited to, 3M Vikuiti™ Dual Brightness Enhancement Film available from 3M Optical Systems Division, St. Paul, MN. In another example, an advanced polarization conversion film (APCF) or a combination of brightness enhancement and APCF films may be employed as the polarization recycling layer 150.

According to some embodiments, the bar collimator 100 may further comprise a light source 160. The light source 160 is configured to provide light to be guided as the guided light 112 by the light guide 110. Figures 1B illustrates a light source 160 at an end of the light guide 110 of the bar collimator 100. According to various embodiments, the light source 160 comprises an optical emitter. Optical emitters include, but are not limited to, a light emitting diode (LED). For example, the LED may be a polychromatic LED configured to provide white light. In other embodiments, the light source 160 may include a monochromatic LED or a plurality of monochromatic LEDs. A combination of different color monochromatic LEDs (e.g., a red LED, a blue LED, and a green LED) may be combined to provide white light, in some embodiments.

In some embodiments, the bar collimator 100 may include a single light source 160, e.g., as illustrated in Figure 1B. In other embodiments, the bar collimator 100 may comprise a pair of light sources 160 located at opposite ends of the light guide 110 of the bar collimator 100. In particular, the bar collimator 100 may comprise a first light source 160 and the end at which the first light source 160 is located may be a first end of the light guide 110. The bar collimator 100 may further comprise a second light source 160' located at a second end of the light guide 110, the second end being opposite to the first end. Figure 2B illustrates the bar collimator 100 comprising both the first light source 160 and the second light source 160'. The second light source 160' may enhance a uniformity of the guided light 112 within the light guide 110 as well as provide a more uniform distribution of the extracted light 106 at an output of the bar collimator 100, in some embodiments. Further, inclusion of the second light source 160' may provide an overall increase intensity of the extracted light 106 when compared to an embodiment that includes only the first light source 160, for example.

In some embodiments, the bar collimator 100 may further comprise a light-coupling reflector layer configured to facilitate coupling of light from the bar collimator 100 to the backlight 102. The light-coupling reflector layer may used to prevent or at least substantially reduce light leakage from one or more surfaces of the bar collimator 100 and associated backlight 102, according to various embodiments. In particular, the light-coupling reflector layer may be used on a guiding surface or surfaces of the bar collimator 100 and backlight 102. As such, the light-coupling reflector layer may be adjacent to a guiding surface that is parallel to a general propagation direction of one or more of the guided light 112, the collimated light 104, and the extracted light 106, according to some embodiments.

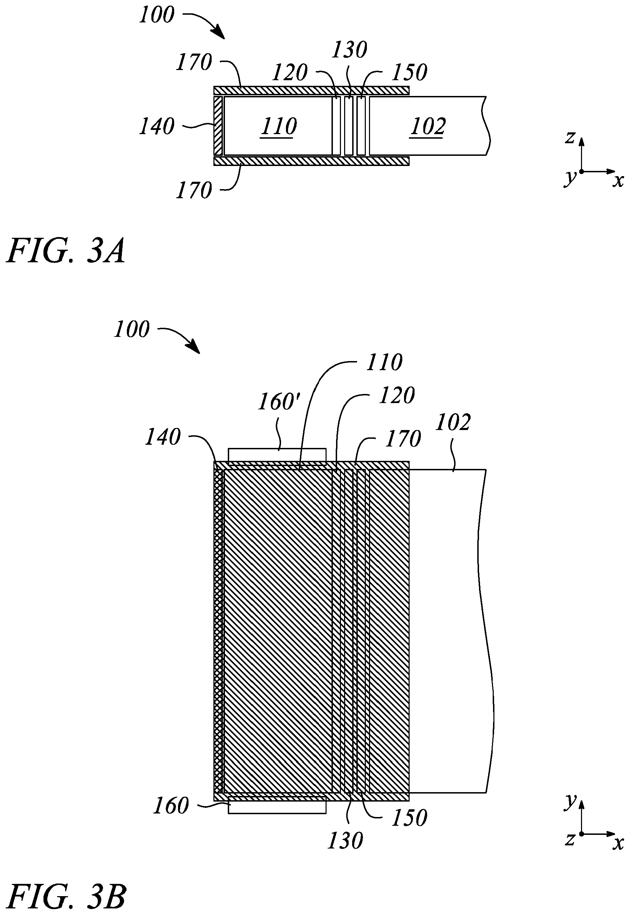

Figure 3A illustrates a side view of a bar collimator 100 including a light-coupling reflector layer 170 in an example, according to an embodiment of the invention consistent with the principles described herein. Figure 3B illustrates a plan view of a bar collimator 100 including a light-coupling reflector layer 170 in an example, according to an embodiment of the invention consistent with the principles described herein. As illustrated, the bar collimator 100 includes a light-coupling reflector layer 170 adjacent to each of a pair of opposing guiding surfaces (e.g., a top surface and a bottom surface) of the light guide 110 of the bar collimator 100. Further, the light-coupling reflector layers 170 extend from the bar collimator 100 and over guiding surfaces of the backlight 102, as illustrated.

According to various embodiments, the light-coupling reflector layer 170 may comprise any of a variety of reflective films including, but not limited to, a film of reflective metal or an enhanced specular reflector (ESR) film applied to the guiding surface(s). Examples of ESR films include, but are not limited to, a Vikuiti™ Enhanced Specular Reflector Film available from 3M Optical Systems Division, St. Paul, MN. Figures 3A-3B also illustrate the light extraction feature 120, the collimation film 130, the reflective layer 140, and the polarization recycling layer 150 of the bar collimator 100 as well as a pair of light sources 160, 160', by way of example and not limitation.

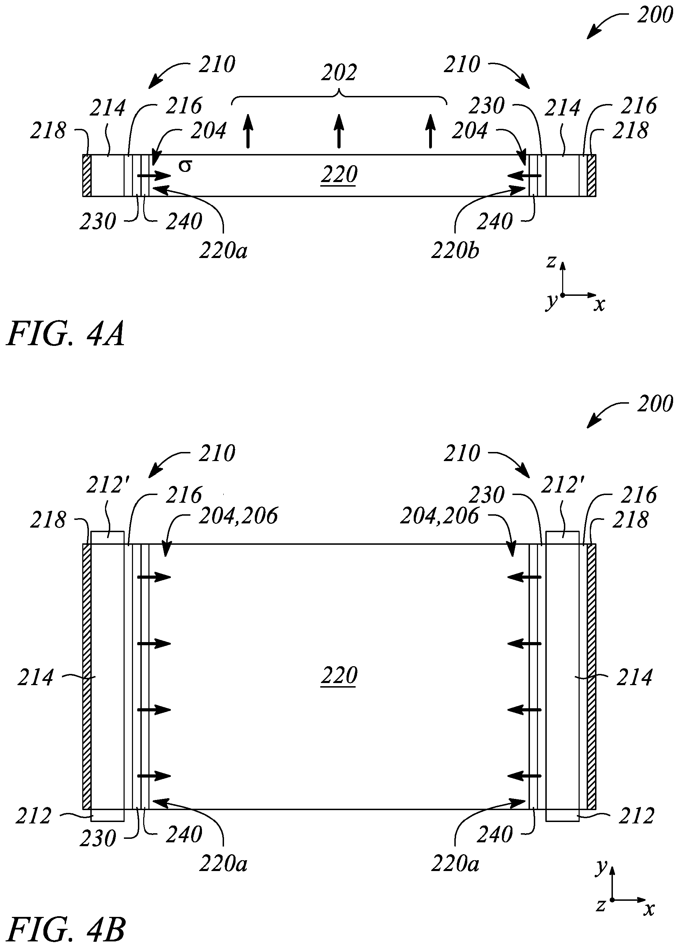

In accordance with other embodiments of the principles described herein, a backlight system 200 is provided. Figure 4A illustrates a side view of a backlight system 200 in an example, according to an embodiment consistent with the principles described herein. Figure 4B illustrates a plan view of a backlight system 200 in an example, according to an embodiment consistent with the principles described herein. The backlight system 200 may be configured to provide illumination in the form of emitted light 202 that is useful in various display applications. For example, the backlight system 200 may provide diffuse illumination as emitted light 202 that may be consistent with displaying an image with a broad viewing angle (e.g., a 2D image). In particular, the displayed image may be configured to provide the same view of the displayed image to a viewer substantially anywhere within the broad viewing angle. In other examples, the backlight system 200 may be configured to provide directional illumination (e.g., a light field) as the emitted light 202. The emitted light 202 representing the directional illumination may be consistent with displaying a multiview image, for example. In these examples, the emitted light 202 may comprise a plurality of directional light beams having different principle angular directions corresponding to different view directions associated with the displayed multiview image.

As illustrated in Figures 4A and 4B, the backlight system 200 comprises a bar collimator 210. The bar collimator 210 comprises a light source 212 configured to provide light. The bar collimator 210 further comprises a light guide 214 configured to guide light received from the light source 212 as guided light. According to various embodiments, the light guide 214 is a bar-shaped light guide, e.g., as illustrated. The bar collimator 210 further comprises a plurality of light extraction features 216. The plurality of light extraction features 216 is configured to scatter a portion of the guided light out of the light guide 214 as extracted light. An arrow illustrates the extracted light in Figures 4A-4B. According to various embodiments, the extracted light is collimated or at least partially collimated by virtue of being extracted from the bar collimator 210, e.g. the extracted light may be collimated light.

The backlight system 200 illustrated in Figures 4A-4B further comprises a backlight 220. The backlight 220 is configured to receive the extracted light from the bar collimator 210. In particular, the extracted light is received as collimated light 206. According to various embodiments, the received collimated light 206 has a collimation factor $\sigma$ that is predetermined by the bar collimator 210. Further, the collimated light 206 received by the backlight 220 from the bar collimator 210 is configured to illuminate the backlight 220. In turn, the illuminated backlight 220 is configured to provide the emitted light 202 using the received collimated light 206. According to various embodiments, the bar collimator 210 is adjacent to an input end 220a of the backlight 220.

In some embodiments, the bar collimator 210 may be substantially similar to the bar collimator 100, described above. In particular, the light source 212 of the bar collimator 210 may be substantially similar to the light source 160 of the above described bar collimator 100. In some embodiments, the light guide 214 may be substantially similar to the light guide 110. Similarly, the light extraction features 216 of the light extraction feature plurality may be substantially similar to the light extraction feature 120 of the bar collimator 100, as described above, in some embodiments.

For example, the light source 212 may be located at an end (e.g., a first end) of the bar-shaped light guide 214, as illustrated. In some embodiments, the bar collimator 210 may further comprise another light source 212'. The other light source 212' may be located at another end (e.g., a second end) of the light guide 214 opposite to the end at which the light source 212 is located, for example. The other light source 212' may be configured to provide additional light to increase an intensity and illumination uniformity of the guided light within the light guide 214 of the bar collimator 210, according to some embodiments. Figure 4B illustrates the bar collimator 210 comprising a pair of light sources 212, 212' located at opposite ends of the light guide 214.

Further, for example, the plurality of light extraction features 216 may comprise one or more of the various light extraction features described above with respect to the light extraction feature 120 including, but not limited to, a diffraction grating and a microprism or prismatic layer (e.g., as illustrated). In some embodiments, the plurality of light extraction features 216 may be located on a backlight-adjacent side of the light guide 214 of the bar collimator 210. For example, the bar collimator 210 illustrated on a left side of the backlight 220 in Figures 4A-4B has the plurality of light extraction features 216 on the backlight-adjacent side, by way of example and not limitation. In other embodiments, the plurality of light extraction features 216 may be located on a side of the light guide 214 opposite to the backlight-adjacent side, e.g., as illustrated on a right side of the backlight 220 in Figures 4A-4B, also by way of example and not limitation. In particular, the plurality of light extraction features 216 may be on the backlight-adjacent side or the side opposite the backlight-adjacent side or even on both sides, according to various embodiments.

In some embodiments, the backlight system 200 may comprise a pair of bar collimators 210. In particular, the backlight system 200 may comprise another bar collimator 210 adjacent to an input end 220b of the backlight 220 opposite or distal to the input end 220a of the backlight 220. The other bar collimator 210 at the distal input end 220b is configured to further illuminate the backlight 220 with extracted light. Figures 4A-4B illustrate the other bar collimator 210 of the bar collimator pair, by way of example and not limitation.

In some embodiments, the bar collimator 210 of the backlight system 200 further comprises a reflective layer 218 on a side of the light guide 214 opposite to a side of the bar collimator 210 that is adjacent to the backlight 220. The reflective layer 218 is configured to reflect light toward the input end 220a, 220b of the backlight 220, according to various embodiments. The reflected light may enhance an intensity of the extracted light, for example. In some embodiments, the reflective layer 218 may be substantially similar to the reflective layer 140 of the bar collimator 100, described above. For example, the reflective layer 140 may comprise a layer of reflective metal or ESR film applied to the light guide side.

In some embodiments, the backlight system 200, or alternatively the bar collimator 210 itself, further comprises one or both of a collimation film 230 and a polarization recycling layer 240 located between the light guide 214 of the bar collimator 210 and the input end 220a, 220b of the backlight 220. In some embodiments, the collimation film 230 may be substantially similar to the collimation film 130 described above with respect to the bar collimator 100. In particular, the collimation film 230 is configured to collimate or further collimate the extracted light before the extracted light (or collimated light 206, as described below) is received by the backlight 220. Similarly, in some embodiments, the polarization recycling layer 240 may be substantially similar, both in implementation and operation, to the polarization recycling layer 150 of the above-described bar collimator 100.

In some embodiments (not illustrated), the backlight 220 comprises a scattering feature (not illustrated) configured to provide diffuse or substantially non-directional emitted light 202. In particular, the scattering feature may comprise a plurality of scattering elements spaced apart from one another across a surface of the backlight 220. The scattering elements may be optically coupled to a light guide of the backlight 220 to scatter out light from the light guide as the diffuse or substantially non-directional emitted light 202, for example. In some embodiments, a size of a scattering element of the scattering element plurality may be less than or equal to a size of a light valve of the light valve array of a display that employs the backlight 220 as source of illumination. The diffuse or substantially non-directional emitted light 202 may have an angular spread or beamwidth consistent with displaying an image with a broad viewing angle (e.g., a 2D image), for example.

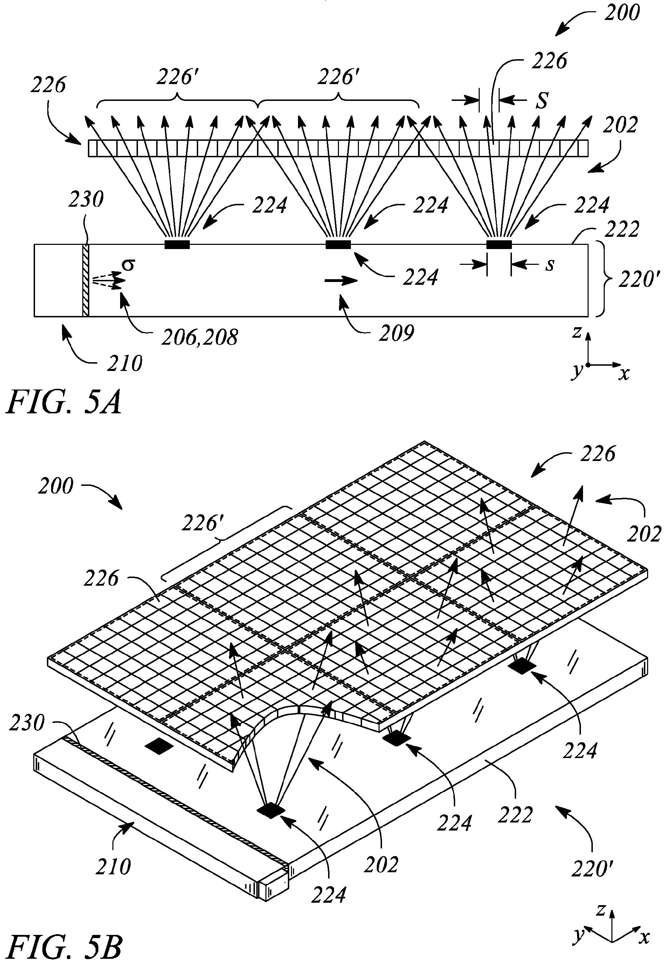

In other embodiments, backlight 220 of the backlight system 200 may be or comprise a multiview backlight 220'. The multiview backlight 220' is configured to provide directional emitted light 202. In particular, the directional emitted light 202 comprises a directional light beams having different principal angular directions from one another. Further, the different principal angular directions of the directional light beams correspond to respective different view directions of a multiview display or equivalently of a multiview image displayed by the multiview display. Figure 5A illustrates a side view of a backlight system 200 comprising a multiview backlight 220' in an example, according to an embodiment consistent with the principles described herein. Figure 5B illustrates a perspective view of the backlight system 200 of Figure 5A in an example, according to an embodiment consistent with the principles described herein.

As illustrated in Figures 5A-5B, the backlight system 200 comprises a bar collimator 210, a collimation film 230, and the multiview backlight 220'. The bar collimator 210 and collimation film 230 are described above. The bar collimator 210 in conjunction with the collimation film 230 are configured to provide collimated light 206 to the input end 220a of the multiview backlight 220'. Note that, while only a single bar collimator 210 is illustrated, a pair of bar collimators 210 at opposite ends of the multiview backlight 220' may be employed in some embodiments, e.g., as described above.

The multiview backlight 220' illustrated in Figures 5A-5B comprises a backlight light guide 222. The backlight light guide 222 is configured to receive the extracted light as the collimated light 206 and to guide the received collimated light 206 as guided collimated light 208. Figure 5A illustrates a general propagation direction 209 of the guided collimated light 208 using a bold arrow. In addition, the guided collimated light 208 has the collimation factor $\sigma$, as illustrated.

As illustrated in Figures 5A-5B, the multiview backlight 220' further comprises a plurality of multibeam elements 224 spaced apart from one another along a length of the backlight light guide 222. A multibeam element 224 of the plurality of multibeam elements 224 is configured to scatter out from the backlight light guide 222 a portion of the guided collimated light 208 as emitted light 202 comprising a plurality of directional light beams. Directional light beams of the emitted light 202, represented by diverging arrows in Figures 5A-5B, have different principal angular directions from one another. Moreover, the different principal angular directions of the plurality of directional light beams correspond to respective different view directions of a multiview display, according to various embodiments.

In some embodiments, a size s of the multibeam element 224 is between about fifty percent and about two hundred percent of a size S of a light valve 226 of a multiview display that employs the multiview backlight 220' as source of illumination. Figures 5A-5B illustrate an example array of light valves 226. As illustrated, each multibeam element 224 is configured to provide directional light beams of the emitted light 202 to one and only one set 226' of light valves 226, each set 226' corresponding to multiview pixel. In particular, for a given one of the multibeam elements 224, the directional light beams having different principal angular directions corresponding to the different views of the multiview display are substantially confined to a single corresponding multiview pixel or equivalently to a single set of light valves 226 corresponding to the multibeam element 224, e.g., as illustrated in Figure 4. As such, each multibeam element 224 of the multiview backlight 220' provides a corresponding set of directional light beams of the emitted light 202 that has a set of the different principal angular directions corresponding to the different views of the multiview display (i.e., the set of directional light beams contains a light beam having a direction corresponding to each of the different view directions).

According to various embodiments, the multibeam element 224 of the multibeam element plurality may comprise any of a number of different structures configured to couple out a portion of the guided collimated light 208. For example, the different structures may include, but are not limited to, diffraction gratings, micro-reflective elements, micro-refractive elements, or various combinations thereof. In some embodiments, the multibeam element 224 comprising a diffraction grating is configured to diffractively couple out the guided light portion as the plurality of directional light beams of the emitted light 202 having the different principal angular directions. In other embodiments, the multibeam element 224 comprising a micro-reflective element is configured to reflectively couple out the guided light portion as the plurality of directional light beams, or the multibeam element 224 comprising a micro-refractive element is configured to couple out the guided light portion as the plurality of directional light beams of the emitted light 202 by or using refraction (i.e., refractively couple out the guided light portion).

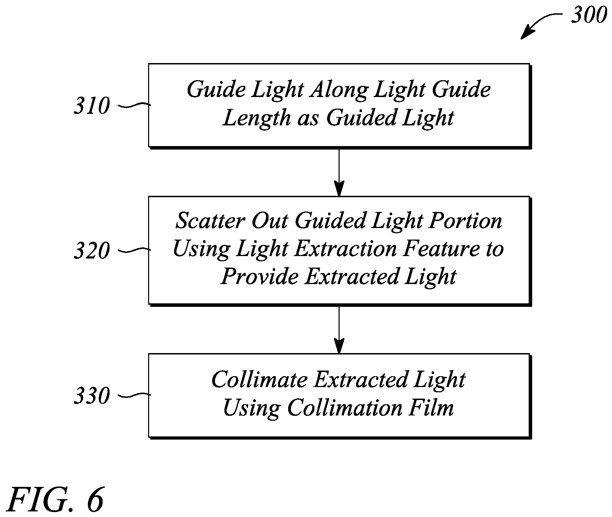

In accordance with other embodiments of the principles described herein, a method of collimating light is provided. Figure 6 illustrates a flow chart of a method 300 of collimating light in an example, according to an embodiment consistent with the principals described herein. As illustrated, the method 300 of collimating light comprises guiding 310 light in a light guide as guided light. According to various embodiments, the light to be guided 310 is received from a light source at an end of the light guide. According to some embodiments, the light guide used in guiding 310 may be substantially similar to the light guide 110 of the bar collimator 100, described above. For example, the light guide may be a bar-shaped light guide. Similarly, the light source that provides the received light may be substantially similar to the light source 160, described above. For example, the light source may provide one or both of monochromatic light and polychromatic light, e.g., white light. Further, the light may be received from a single light source at the end or from a pair of light sources at opposite ends of the light guide, according to various embodiments.

According to various embodiments, the method 300 of collimating light further comprises scattering 320 a portion of the guided light from the light guide using a light extraction feature on a side of the light guide to provide extracted light. Further, the extracted light is directed toward an input of a backlight by scattering 320 of the guided light portion. In some embodiments, the light extraction feature used in scattering 320 may be substantially similar to the light extraction feature 120 of the above described bar collimator 100. For example, the light extraction feature may be located on one or both of a side adjacent to the backlight and a side opposite to the backlight-adjacent side of the light guide. Further, the extracted light may be collimated light or at least partially collimated light, in some embodiments.

The method 300 of collimating light illustrated in Figure 6 further comprises collimating 330 the extracted light to provide collimated light using a collimation film to provide collimated light. The collimation film used in collimating 330 is located between the light guide and the backlight. The collimated light is received by and illuminates the backlight. Further, the collimated light has an extent corresponding to a length of an input of the backlight. In some embodiments, the collimation film may be substantially similar to the collimation film 130 described above with respect to the bar collimator 100. For example, the collimation film may comprise a prismatic film configured as a brightness enhancement film. In some embodiments, collimating 330 the extracted light further collimates the extracted light.

In some embodiments (not illustrated), the method 300 of collimating light further comprises reflecting light that is scattered in a direction away from backlight using a reflective layer on a side of the light guide opposite to a backlight-adjacent side of the light guide, the reflective layer reflecting the light toward the backlight input. In some embodiments, the reflective layer may be substantially similar to the reflective layer 140 of the bar collimator 100, described above.

In some embodiments, the backlight is a multiview backlight. In these embodiments (not illustrated), the method 300 of collimating light further comprises guiding the collimated light in a light guide of the backlight, the collimated light being received by the backlight light guide at the backlight input. Further, in these embodiments (not illustrated), the method 300 of collimating light further comprises providing emitted light comprising a plurality of directional light beams by scattering out a portion of the guided collimated light using a multibeam element of the multiview backlight. The plurality of directional light beams have different principal angular directions corresponding to respective different view directions of a multiview display, according to various embodiments.

Thus, there have been described examples and embodiments of a bar collimator, a backlight system including a bar collimator, and a method of collimating light that include a light extraction feature on a side of a light guide to provide collimated light to an input of a backlight. It should be understood that the above-described examples are merely illustrative of some of the many specific examples that represent the principles described herein. Clearly, those skilled in the art can readily devise numerous other arrangements without departing from the scope as defined by the following claims.

**Claims**

1.   A backlight, comprising:

   a bar collimator (100) and a backlight light guide, the bar collimator
   comprising:

      a light guide (110) configured to guide light along a length of the light guide as guided light;
      a light extraction feature (120) comprising a prismatic layer affixed to a side of the light guide along the light guide length, the light extraction feature being configured to scatter a portion of the guided light out of the light guide as extracted light and to direct the extracted light toward an input (102a) of the backlight light guide (102); and

a collimation film (130) between the light guide and the backlight input, the collimation film being configured to collimate the extracted light as collimated light (104),

wherein the collimated light has an extent corresponding to a length of the backlight input and is configured to serve as an illumination source of the backlight light guide,

the backlight light guide being configured to receive the collimated light from the bar collimator at the input of the backlight light guide and to guide the received collimated light as guided collimated light,

**characterised in that** the bar collimator comprises a light-coupling reflector layer (170) adjacent to each of a top surface and a bottom surface of the light guide (110) and wherein each of the light-coupling reflector layers extend from the bar collimator (100) and over guiding surfaces of the backlight light guide.

2. The backlight of Claim 1, wherein the side of the light guide (110) upon which the light extraction feature (120) is located is a side adjacent to the backlight, or
wherein the side of the light guide (110) upon which the light extraction feature (120) is located is a side opposite to the backlight.

3. The backlight of Claim 1, wherein the light extraction feature (120) comprises a material of a surface of the side of the light guide (110).

4. The backlight of Claim 1, wherein the collimation film (130) comprises a prismatic film configured as a brightness enhancement film.

5. The backlight of Claim 1, further comprising a reflective layer (140) on a side of the light guide (110) opposite to a backlight-adjacent side of the light guide, the reflective layer being configured to reflect light toward the backlight input.

6. The backlight of Claim 1, further comprising a polarization recycling film (150) between the light guide (110) and the backlight input (102a), the polarization recycling film being configured to recycle light received from the backlight input and redirect the recycled light back toward the backlight input.

7. The backlight of Claim 1, further comprising a light source (160) located at an end of the light guide, the light source being configured to provide light to be guided as the guided light by the light guide.

8. The backlight of Claim 7, wherein the light source (160) is a first light source and the end at which the first light source is located is a first end of the light guide (110) , the bar collimator further comprising a second light source (160') located at a second end of the light guide, the second end being opposite to the first end.

9. The backlight of Claim 1, wherein the collimated light is configured to be uniform along a length of the input of the backlight.

10. The backlight of claim 1, further comprising

a plurality of multibeam elements (224) spaced apart from one another along a length of the backlight light guide, a multibeam element of the plurality of multibeam elements being configured to scatter out from the backlight light guide a portion of the guided collimated light as emitted light comprising a plurality of directional light beams having different principal angular directions from one another,
wherein the different principal angular directions of the plurality of directional light beams of the emitted light correspond to respective different view directions of a multiview display.

11. The backlight of Claim 1, further comprising another bar collimator adjacent to a distal input end of the backlight opposite to the input of the backlight, the other bar collimator at the distal input end being configured to further illuminate the backlight with collimated light.

12. A method of collimating light in the backlight of claim 1, the method comprising:

guiding light in the light guide (110) as guided light, the light being received from a light source (160) at an end of the light guide;
scattering a portion of the guided light from the light guide using the light extraction feature (120) comprising the prismatic layer affixed to a side of the light guide to provide extracted light, the extracted light being directed toward the input (102a) of the backlight light guide (102); and

collimating the extracted light using the collimation film (130) to provide collimated light, the collimation film being located between the light guide and the backlight input,
wherein the collimated light is received by and illuminates the backlight light guide, and wherein the collimated light has an extent corresponding to a length of an input of the backlight light guide.

**Patentansprüche**

1. Hintergrundbeleuchtung, umfassend:
einen Stabkollimator (100) und einen Hintergrundbeleuchtungs-Lichtleiter, wobei der Stabkollimator umfasst:

einen Lichtleiter (110), der so ausgelegt ist, dass er Licht entlang einer Länge des Lichtleiters als geleitetes Licht leitet;
ein Lichtextraktionsmerkmal (120), das eine prismatische Schicht umfasst, die an einer Seite des Lichtleiters entlang der Lichtleiterlänge fixiert ist, wobei das Lichtextraktionsmerkmal so ausgelegt ist, dass es einen Teil des geleiteten Lichts aus dem Lichtleiter als extrahiertes Licht streut und das extrahierte Licht zu einem Eingang (102a) des Hintergrundbeleuchtungs-Lichtleiters (102) richtet; und
eine Kollimationsfolie (130) zwischen dem Lichtleiter und dem Hintergrundbeleuchtungseingang, wobei die Kollimationsfolie so ausgelegt ist, dass sie das extrahierte Licht als kollimiertes Licht (104) kollimiert,
wobei das kollimierte Licht eine Ausdehnung aufweist, die einer Länge des Hintergrundbeleuchtungseingangs entspricht, und so ausgelegt ist, dass es als Beleuchtungsquelle des Hintergrundbeleuchtungs-Lichtleiters dient, der Hintergrundbeleuchtungs-Lichtleiter so ausgelegt ist, dass er das kollimierte Licht vom Stabkollimator am Eingang des Hintergrundbeleuchtungs-Lichtleiters empfängt und das empfangene kollimierte Licht als geleitetes kollimiertes Licht leitet,
**dadurch gekennzeichnet, dass** der Stabkollimator eine Licht einkoppelnde Reflektorschicht (170) benachbart zu jeder von einer Oberseite und einer Unterseite des Lichtleiters (110) umfasst, und wobei sich jede der Licht einkoppelnden Reflektorschichten vom Stabkollimator (100) und über Leitflächen des Hintergrundbeleuchtungs-Lichtleiters erstreckt.

2. Hintergrundbeleuchtung nach Anspruch 1, wobei die Seite des Lichtleiters (110), auf der sich das Lichtextraktionsmerkmal (120) befindet, eine Seite benachbart zur Hintergrundbeleuchtung ist, oder
wobei die Seite des Lichtleiters (110), auf der sich das Lichtextraktionsmerkmal (120) befindet, eine Seite gegenüber der Hintergrundbeleuchtung ist.

3. Hintergrundbeleuchtung nach Anspruch 1, wobei das Lichtextraktionsmerkmal (120) ein Material einer Oberfläche der Seite des Lichtleiters (110) umfasst.

4. Hintergrundbeleuchtung nach Anspruch 1, wobei die Kollimationsfolie (130) eine prismatische Folie umfasst, die als Helligkeitsverbesserungsfolie ausgelegt ist.

5. Hintergrundbeleuchtung nach Anspruch 1, ferner umfassend eine reflektierende Schicht (140) auf einer Seite des Lichtleiters (110) gegenüber einer benachbart zur Hintergrundbeleuchtung liegenden Seite des Lichtleiters, wobei die reflektierende Schicht zum Reflektieren von Licht zum Hintergrundbeleuchtungseingang ausgelegt ist.

6. Hintergrundbeleuchtung nach Anspruch 1, ferner umfassend eine Polarisationsrecyclingfolie (150) zwischen dem Lichtleiter (110) und dem Hintergrundbeleuchtungseingang (102a), wobei die Polarisationsrecyclingfolie so ausgelegt ist, dass sie Licht, das vom Hintergrundbeleuchtungseingang empfangen wird, recycelt und das recycelte Licht zum Hintergrundbeleuchtungseingang zurück richtet.

7. Hintergrundbeleuchtung nach Anspruch 1, ferner umfassend eine Lichtquelle (160), die sich an einem Ende des Lichtleiters befindet, wobei die Lichtquelle so ausgelegt ist, dass sie Licht bereitstellt, das als das geleitete Licht durch den Lichtleiter geleitet werden soll.

8. Hintergrundbeleuchtung nach Anspruch 7, wobei die Lichtquelle (160) eine erste Lichtquelle ist und das Ende, an dem sich die erste Lichtquelle befindet, ein erstes Ende des Lichtleiters (110) ist, wobei der Stabkollimator ferner eine zweite Lichtquelle (160') umfasst, die sich an einem zweiten Ende des Lichtleiters befindet, wobei das zweite Ende gegenüber dem ersten Ende ist.

9. Hintergrundbeleuchtung nach Anspruch 1, wobei das kollimierte Licht so ausgelegt ist, dass es entlang einer Länge des Eingangs der Hintergrundbeleuchtung gleichmäßig ist.

10. Hintergrundbeleuchtung nach Anspruch 1, ferner umfassend:

eine Mehrzahl von Mehrstrahlelementen (224), die entlang einer Länge des Hintergrundbeleuchtungs-Lichtleiters voneinander beabstandet sind, wobei ein Mehrstrahlelement der Mehrzahl von Mehrstrahlelementen so ausgelegt ist, dass es einen Teil des geleiteten kollimierten Lichts als emittiertes Licht, das eine Mehrzahl von gerichteten Lichtstrahlen mit voneinander verschiedenen Hauptwinkelrichtungen umfasst, aus dem Hintergrundbeleuchtungs-Lichtleiter streut,
wobei die verschiedenen Hauptwinkelrichtungen der Mehrzahl von gerichteten Lichtstrahlen des emittierten Lichts jeweiligen verschiedenen Blickrichtungen einer Mehrfachansichtsanzeige entsprechen.

11. Hintergrundbeleuchtung nach Anspruch 1, ferner umfassend einen weiteren Stabkollimator benachbart zu einem distalen Eingangsende der Hintergrundbeleuchtung gegenüber dem Eingang der Hintergrundbeleuchtung, wobei der weitere Stabkollimator am distalen Eingangsende so ausgelegt ist, dass er die Hintergrundbeleuchtung ferner mit kollimierten Licht beleuchtet.

12. Verfahren zum Kollimieren von Licht in der Hintergrundbeleuchtung nach Anspruch 1, wobei das Verfahren umfasst:

Leiten von Licht indem Lichtleiter (110) als geleitetes Licht, wobei das Licht von einer Lichtquelle (160) an einem Ende des Lichtleiters empfangen wird;
Streuen eines Teils des geleiteten Lichts aus dem Lichtleiter unter Verwendung des Lichtextraktionsmerkmals (120), das die prismatische Schicht umfasst, die an einer Seite des Lichtleiters fixiert ist, um extrahiertes Licht bereitzustellen, wobei das extrahierte Licht zum Eingang (102a) des Hintergrundbeleuchtungs-Lichtleiters (102) gerichtet wird; und
Kollimieren des extrahierten Lichts unter Verwendung der Kollimationsfolie (130), um kollimiertes Licht bereitzustellen, wobei sich die Kollimationsfolie zwischen dem Lichtleiter und dem Hintergrundbeleuchtungseingang befindet,
wobei das kollimierte Licht durch den Hintergrundbeleuchtungs-Lichtleiter empfangen wird und diesen beleuchtet, und wobei das kollimierte Licht eine Ausdehnung aufweist, die einer Länge eines Eingangs des Hintergrundbeleuchtungs-Lichtleiters entspricht.

**Revendications**

1. Rétroéclairage comprenant :
un collimateur à barres (100) et un guide de lumière de rétroéclairage, le collimateur à barres comprenant :

un guide de lumière (110) configuré pour guider la lumière sur une longueur du guide de lumière en tant que lumière guidée ;
une caractéristique d'extraction de lumière (120) comprenant une couche prismatique fixée sur un côté du guide de lumière sur la longueur du guide de lumière, la caractéristique d'extraction de lumière étant configurée pour diffuser une partie de la lumière guidée hors du guide de lumière sous forme de lumière extraite et pour diriger la lumière extraite vers une entrée (102a) du guide de lumière de rétroéclairage (102) ; et
un film de collimation (130) entre le guide de lumière et l'entrée de rétroéclairage, le film de collimation étant configuré pour collimater la lumière extraite en tant que lumière collimatée (104),
la lumière collimatée ayant une étendue correspondant à une longueur de l'entrée de rétroéclairage et étant configurée pour servir de source d'éclairage du guide de lumière de rétroéclairage,
le guide de lumière de rétroéclairage étant configuré pour recevoir la lumière collimatée du collimateur à barres à l'entrée du guide de lumière de rétroéclairage et pour guider la lumière collimatée reçue en tant que lumière collimatée guidée,
**caractérisé en ce que** le collimateur à barres comprend une couche de réflecteur de couplage de lumière (170) adjacente à chacune d'une surface supérieure et d'une surface inférieure du guide de lumière (110) et **en ce que** chacune des couches de réflecteur de couplage de lumière s'étend à partir du collimateur à barres (100) et sur les surfaces de guidage du guide de lumière de rétroéclairage.

2. Rétroéclairage selon la revendication 1, le côté du guide de lumière (110) sur lequel la caractéristique d'extraction de lumière (120) est située étant un côté adjacent au rétroéclairage, ou

le côté du guide de lumière (110) sur lequel la caractéristique d'extraction de lumière (120) est située étant un côté opposé au rétroéclairage.

3. Rétroéclairage selon la revendication 1, la caractéristique d'extraction de lumière (120) comprenant un matériau d'une surface du côté du guide de lumière (110).

4. Rétroéclairage selon la revendication 1, le film de collimation (130) comprenant un film prismatique configuré comme un film d'amélioration de la luminosité.

5. Rétroéclairage selon la revendication 1, comprenant en outre une couche réfléchissante (140) sur un côté du guide de lumière (110) opposé à un côté du guide de lumière adjacent au rétroéclairage, la couche réfléchissante étant configurée pour réfléchir la lumière vers l'entrée de rétroéclairage.

6. Rétroéclairage selon la revendication 1, comprenant en outre un film de recyclage de la polarisation (150) entre le guide de lumière (110) et l'entrée de rétroéclairage (102a), le film de recyclage de la polarisation étant configuré pour recycler la lumière reçue en provenance de l'entrée de rétroéclairage et rediriger la lumière recyclée vers l'entrée de rétroéclairage.

7. Rétroéclairage selon la revendication 1, comprenant en outre une source de lumière (160) située à une extrémité du guide de lumière, la source de lumière étant configurée pour fournir de la lumière à guider en tant que lumière guidée par le guide de lumière.

8. Rétroéclairage selon la revendication 7, la source de lumière (160) étant une première source de lumière et l'extrémité à laquelle la première source de lumière est située étant une première extrémité du guide de lumière (110), le collimateur à barres comprenant en outre une seconde source de lumière (160') située à une seconde extrémité du guide de lumière, la seconde extrémité étant opposée à la première extrémité.

9. Rétroéclairage selon la revendication 1, la lumière collimatée étant configurée pour être uniforme sur une longueur de l'entrée du rétroéclairage.

10. Rétroéclairage selon la revendication 1, comprenant en outre :

une pluralité d'éléments multifaisceaux (224) espacés les uns des autres sur une longueur du guide de lumière de rétroéclairage, un élément multifaisceaux de la pluralité d'éléments multifaisceaux étant configuré pour diffuser hors du guide de lumière de rétroéclairage une partie de la lumière collimatée guidée sous forme de lumière émise comprenant une pluralité de faisceaux de lumière directionnels ayant des directions angulaires principales différentes les unes des autres,

les différentes directions angulaires principales de la pluralité de faisceaux lumineux directionnels de la lumière émise correspondant à différentes directions de vue respectives d'un dispositif d'affichage multivues.

11. Rétroéclairage selon la revendication 1, comprenant en outre un autre collimateur à barres adjacent à une extrémité d'entrée distale de rétroéclairage opposée à l'entrée du rétroéclairage, l'autre collimateur à barres à l'extrémité d'entrée distale étant configuré pour éclairer davantage le rétroéclairage avec une lumière collimatée.

12. Procédé de collimation de la lumière dans le rétroéclairage selon la revendication 1, le procédé comprenant :

le guidage de la lumière dans le guide de lumière (110) en tant que lumière guidée, la lumière étant reçue en provenance d'une source de lumière (160) à une extrémité du guide de lumière ;

la diffusion d'une partie de la lumière guidée en provenance du guide de lumière à l'aide de la caractéristique d'extraction de lumière (120) comprenant la couche prismatique fixée sur un côté du guide de lumière pour fournir une lumière extraite, la lumière extraite étant dirigée vers l'entrée (102a) du guide de lumière de rétroéclairage (102) ; et

la collimation de la lumière extraite à l'aide du film de collimation (130) pour fournir une lumière collimatée, le film de collimation étant situé entre le guide de lumière et l'entrée de rétroéclairage,

la lumière collimatée étant reçue par le guide de lumière de rétroéclairage et l'éclairant, et la lumière collimatée ayant une étendue correspondant à la longueur d'une entrée du guide de lumière de rétroéclairage.

FIG. 1A

FIG. 1B

**FIG. 1C**

**FIG. 1D**

FIG. 2A

FIG. 2B

*FIG. 3A*

*FIG. 3B*

FIG. 4A

FIG. 4B

FIG. 5A

FIG. 5B

300

| |
|---|
| **Guide Light Along Light Guide Length as Guided Light** |

310

| |
|---|
| **Scatter Out Guided Light Portion Using Light Extraction Feature to Provide Extracted Light** |

320

| |
|---|
| **Collimate Extracted Light Using Collimation Film** |

330

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003007114 A
- KR 101408688 B1
- WO 2016106987 A
- US 2008043490 A1